# EUROPÄISCHE PATENTANMELDUNG

(11) **EP 0 532 990 A2**
(43) Veröffentlichungstag der Anmeldung: **24.03.1993**
(21) Anmeldenummer: 92115118.9
(22) Anmeldetag: 04.09.1992
(51) Int. Cl.: F16B 25/00, B21H 3/02

(54) **Gewindefurchende Schraube sowie Verfahren zum Herstellen derselben und Walzbacken zur Durchführung des Verfahrens**

(30) Priorität: 19.09.1991 DE 4131165
(71) Anmelder: Wilhelm Schumacher KG, D-57271 Hilchenbach (DE)
(72) Erfinder: Schwarzpaul, Erwin, W-5912 Hilchenbach (DE)
(74) Vertreter: Müller, Gerd, Dipl.-Ing.

(57) **Zusammenfassung**

Vorgeschlagen wird eine gewindefurchende Schraube 2, bei der der Schaft 5 auf seiner ganzen Länge einen durchgehend kreisförmigen Kernquerschnitt aufweist und bei der auch der in den Schaft 5 eingerollte Gewindegang 15 eine kreisförmig verlaufende, äußere Umfangsbegrenzung hat.

Damit beim Eindrehen der gewindefurchenden Schraube in ein vorgegebenes Loch ein selbsttätiges axiales Ausrichten derselben erreicht wird, ist die Schraube 2 gekennzeichnet durch Herstellung aus einem Rohling mit wenigstens annähernd zylindrischem Schaft, an dessen freiem Ende sich ein über einen vorgegebenen Längenabschnitt in seinem Durchmesser zylindrisch abgesetzter Zapfen befindet, und durch ein in diesen Rohling mit einem den Zapfendurchmesser unterschreitenden Kerndurchmesser 16 eingerolltes Gewinde 15, dessen Profil auf dem den größeren Rohdurchmesser aufweisenden Schaftteil vollständig ausgeformt ist und/oder den Nenndurchmesser 17 aufweist, während es über die mit dem kleineren Rohdurchmesser versehene Zapfenlänge höchstens ein Profilfragment bildet, dessen Durchmesser 18 den Nenndurchmesser 17 unterschreitet.

## Beschreibung

Die Erfindung betrifft eine gewindefurchende Schraube, bei der der Schaft auf seiner ganzen Länge einen durchgehend kreisförmigen Kernquerschnitt aufweist und bei der auch der in diesen Schaft eingerollte Gewindegang eine kreisförmig verlaufende, äußere Umfangsbegrenzung hat.

Eine mit solchen Merkmalen ausgestattete, gewindefurchende Schraube ist bereits bekannt durch die DE-PS 27 03 433. Hierbei weist der in den Schaft eingerollte Gewindegang auf in Schraubenlängsrichtung verlaufenden Umfangsabschnitten Höcker auf, die über die Gewindeflanken und die Gewindespitze des Gewindeprofils hinweg verlaufen und einstückig aus dem Material des Schraubenschaftes auf die Gewindeflanken und Gewindespitze geformt sind.

Diese bekannte Schraube hat sich in der Praxis bestens bewährt und zeichnet sich dadurch aus, daß die Höcker auf über die ganze Gewindelänge des Schraubenschaftes verlaufenden Umfangsabschnitten gleichbleibender Breite liegen, die dem Gewinde gleichmäßig, mit wesentlich größerer Steigung als der des Gewindes, schraubenlinienförmig um den Schaftumfang verlaufend überlagert sind und dabei dieselbe Steigungsrichtung wie das Gewinde haben.

Mit gewindefurchenden Schrauben, die diese besonderen Merkmale haben, können unter Aufbringung nur geringer Einschraubmomente Muttergewinde erzeugt werden, die auf ihrer ganzen Länge lehrenhaltig sind. Erreicht wird dieser Vorteil dadurch, daß das beim Furchvorgang des Muttergewindes zu verdrängende Material von jedem Höcker in Richtung auf die benachbarte Gewindeflanke verschoben wird und sich auf diese Weise die Schraube mit einem geringen Einschraubmoment eindrehen läßt.

Bei allen bekannten gewindefurchenden Schrauben, also nicht nur bei solchen der vorstehend erläuterten, gattungsgemäßen Art, sondern auch bei jenen mit trilobularem Querschnitt bzw. unrundem Gleichdick-Profil, besteht das Problem bzw. die Schwierigkeit, daß die Ausrichtung ihres Schaftes beim Einsetzen in das Loch des Werkstücks zum Verkanten neigt, also seine Längsachse eine Lage einnimmt, die unter einem Winkel bzw. schräg zur Lochmittelachse im Werkstück verläuft.

Verursacht wird dieses in der Regel unerwünschte Verkanten durch das angefaste Ende des Schraubengewindes, weil es dazu neigt, sich längs eines schraubenlinienförmigen Weges in die Lochwand einzugraben. Da es dann aber immer nur einen Punkt auf dem Gewinde gibt, dessen Achsabstand dem halben Lochdurchmesser im Werkstück entspricht, kann theoretisch die Schraubenachse zu Beginn um einen Winkel schief stehen, wie er dem Verjüngungswinkel des Gewindes entspricht. Bei der unerwünschten Schiefstellung der Schraube kommt dann der Furchvorgang für das Gewinde meistens nur unter einem übermäßigen Axialdruck zustande, und es stellt sich als Nachteil ein, daß die völlig in das Loch eingeschraubte Schraube schief steht.

Bei den gewindefurchenden Schrauben mit lobularem, insbesondere trilobularem Schaftquerschnitt und Gewindeumfang wurde daher zur Vermeidung dieser Nachteile der Eindringabschnitt des Schraubenschaftes zwischen der Eindringseite und einer angeschrägten Formation des Furchgewindes mit einem sogenannten Pilotgewinde ausgestattet, dessen Spitzenquerschnitt über 360° Umfang hinweg im wesentlichen gleichförmig ausgebildet ist und dessen maximales Spitzenmaß kleiner ist als das maximale Spitzenmaß des Furchgewindes im Bereich der angeschrägten Gewindeformation. Durch das Pilotgewinde soll dabei die senkrechte Anfangsstellung der Schraube gegenüber dem Werkstück stabilisiert bzw. die koaxiale Ausrichtung der Schraubenschaftachse zur Lochachse sichergestellt werden, so daß der kritische Beginn der Gewindeformung erleichtert wird und die richtige Relativstellung der eingedrehten Schraube im Werkstück gewährleistet.

Bei dieser bekannten gewindeformenden Schraube wird das leichte Ansetzen und Zentrieren zu Beginn der Gewindeformung dadurch erreicht, daß die Gewindetiefe des zum freien Schaftende hin abnimmt, und zwar durch Verringerung des Gewindeaußendurchmessers an dem sowohl mit seinem Kern als auch mit seinem Gewinde trilobular ausgebildeten Schaft.

Der Nachteil dieser bekannten Schrauben liegt in deren relativ teuren Herstellung. Es werden hierzu Walzbacken benötigt, die nur unter großen Schwierigkeiten gefertigt werden können. Hinzu kommt noch, daß praktisch für jede benötigte Schraubenschaftlänge ein eigenes Walzbacken-Paar verfügbar sein muß.

Der Erfindung liegt die Aufgabe zugrunde, eine gewindefurchende Schraube der eingangs spezifizierten Gattung anzugeben, die ein selbsttätiges axiales Ausrichten ihres Schaftes zu dem mit dem Furchgewinde zu versehenden Loch im Werkstück schon zum kritischen Beginn der Gewindeformung gewährleistet, zugleich aber eine einfache und kostengünstige Schraubenherstellung mit Hilfe von Walzbacken-Ausführungen ermöglicht bzw. zuläßt, wie sie zur Herstellung gattungsgemäßer gewindefurchender Schrauben üblich sind.

Die Lösung dieser Aufgabe ist bei einer gewindefurchenden Schraube gattungsgemäßer Art nach Anspruch 1 gekennzeichnet durch
- einen Rohling mit wenigstens annähernd zylindrischem Schaft, an dessen freiem Ende sich ein über einen vorgegebenen Längenabschnitt in seinem Durchmesser zylindrisch abgesetzter Zapfen befindet,
- und durch ein in diesen Rohling mit einem den Zapfendurchmesser unterschreitenden Kerndurchmesser eingerolltes Gewinde, dessen Profil auf dem den größeren Rohdurchmesser aufweisenden Schaftteil vollständig ausgeformt ist und/oder den Nenndurchmesser aufweist, während es über die mit dem kleineren Rohdurchmesser vorgesehene Zapfenlänge höchstens ein Profilfragment bildet, welches den Nenndurchmesser unterschreitet.

Praktische Versuche mit gewindefurchenden Schrauben dieser Ausgestaltung haben ergeben, daß selbst bei bewußt schrägem Ansetzen zur Lochachse ein axiales Ausrichten des Schraubenschaftes zur Lochachse herbeigeführt wird und sich dadurch weitestgehend das geringe Furchmoment dieser Schrauben erhalten läßt.

Als vorteilhaft hat sich nach der Erfindung erwiesen, wenn am Rohling die vorgegebene Länge des zylindrisch abgesetzten Zapfens einem Maß entspricht, das zwischen zwei und vier Gewinde-Steigungsabständen liegt und dabei vorzugsweise drei Steigungsabstände des Gewindes beträgt.

Bewährt hat sich nach der Erfindung aber auch, wenn der - größere - Durchmesser des Schaftes am Rohling zum Nennmaß des auf diesem vollständig ausgeformten Gewindes in einem Verhältnis zwischen 0,85 : 1 und 0,9 : 1 steht, während der - kleinere - Durchmesser des am Rohling befindlichen Zapfens zum Durchmesser des fragmentarisch profilierten Gewindeabschnitts ein Verhältnis zwischen 0,9 : 1 und 0,98 : 1 hat.

Die Erfindung sieht in weiterer Ausgestaltung der gewindefurchenden Schraube auch noch vor, daß der Zapfen des Rohlings eine konische Endphase hat, während sich zwischen diesem Zapfen und dem Schaft eine ebenfalls konische Übergangsphase befindet. Dabei hat sich bewährt, wenn der Konuswinkel der Endphase größer, vorzugsweise etwa doppelt so groß wie der Konuswinkel der Übergangsphase ausgeführt ist.

Die vorstehend aufgezeigten Ausbildungsmaßnahmen lassen sich auch bei gewindefurchenden Schrauben verwirklichen, bei denen der in den Schaft eingerollte Gewindegang auf in Schraubenlängsrichtung verlaufenden Umfangsabschnitten Höcker aufweist, die über die Gewindeflanken und die Gewindespitze des Gewindeprofils hinweg verlaufen und einstückig aus dem Material des Schraubenschaftes auf die Gewindeflanken und Gewindespitzen geformt sind. In diesem Falle lassen sich dann aber auch als Erfindungsmerkmale verwirklichen, daß die Höcker zumindest auf über die das vollständig ausgeformte Gewindeprofil aufweisende Gewindelänge des Schraubenschaftes verlaufenden Umfangsabschnitten gleichbleibender Breite liegen, die dem Gewinde gleichmäßig, mit wesentlich größerer Steigung als der des Gewindes, schraubenlinienförmig um den Schaftumfang verlaufend überlagert sind und dabei dieselbe Steigungsrichtung wie das Gewinde haben.

Bewährt hat es sich in diesem Falle, wenn die Gewindegänge mit vier gleichmäßig um den Schaftumfang verteilt angeordneten streifenförmigen Umfangsabschnitten größerer Profilhöhe versehen sind und wenn das Verhältnis ihres Nenndurchmessers zur Steigung der steil schraubenlinienförmig verlaufenden Umfangsabschnitte größerer Profilhöhe etwa 1 : 9 beträgt.

Ein erfindungsgemäßes Verfahren zur Herstellung gewindefurchender Schrauben durch Drückformen der Gewindegänge mittels gerillter Flachbacken auf Gewindewalzmaschinen zeichnet sich im wesentlichen dadurch aus, daß Schrauben-Rohlinge mit einem an ihrem freien Ende über einen vorgegebenen Längenabschnitt in seinem Durchmesser auf ein verringertes Maß zapfenartig zylindrisch abgesetzten Schaft eingesetzt und auf diese das Gewinde mit einem über seine Gesamtlänge gleichen, aber den Zapfendurchmesser unterschreitenden Kerndurchmesser aufgewalzt wird, und daß dabei mit dem Walzvorgang des Gewindeprofil lediglich über den Längenbereich des größeren Schaftdurchmessers vollständig und/oder mit Nenndurchmesser ausgeformt wird. Die Schraubenrohlinge können bei diesem Herstellungsverfahren mit einer Zugfestigkeit von etwa 40 bis 70 kp/mm² eingesetzt werden.

Walzbacken zur Durchführung dieses Verfahrens, welche mit einem dem Gewindequerschnitt entsprechenden Rillenprofil versehen sind, zeichnen sich erfindungsgemäß dadurch aus, daß sie mit einer mindestens der gesamten Schaftlänge eines Rohlings entsprechenden Breite und mit einer über diese gesamte Breite hinweg gleichbleibenden Tiefe des dem vollständigen Gewindequerschnitt entsprechenden Rillenprofil versehen sind, wobei einerseits die Rillenkämme und andererseits die Rillenfüße an den Flachbacken jeweils über die gesamte Breite auf einer gemeinsamen Ebene liegen.

Zur Einformung des Gewindeprofils in Schrauben-Rohlinge mit einer Zugfestigkeit von etwa 40 bis 70 kp/mm² ist es schließlich noch wichtig, Flachbacken mit einer Härte zwischen 57 Rc und 60 Rc einzusetzen.
Anhand einer Zeichnung wird nachfolgend die Erfindung im einzelnen erläutert. Es zeigen
- Figur 1: in stark vergrößerter, räumlicher Ansichtsdarstellung einen Schraubenrohling mit im wesentlichen zylindrischem Schaft, der an seinem freien Ende mit einem ebenfalls zylindrischen, aber auf einen verringerten Durchmesser abgesetzten Zapfen versehen ist,
- Figur 2: den Schraubenrohling nach Fig. 1 in der Seitenansicht,
- Figur 3: ebenfalls in stark vergrößerter räumlicher Ansichtsdarstellung eine unter Verwendung des Rohlings nach Fig. 1 hergestellte erfindungsgemäße gewindefurchende Schraube,
- Figur 4: die Schraube nach Fig. 3 in der Seitenansicht,
- Figur 5: in der Seitenansicht und teilweise im Schnitt die gewindefurchende Schraube nach den Fig. 3 und 4 zu Beginn ihres Eindrehvorgangs in das Loch eines Werkstücks, und
- Figur 6: in schematisch vereinfachter Darstellung das Zusammenwirken eines aus zwei Flachbacken bestehenden Walzbacken-Paares zum Herstellen gewindefurchender Schrauben aus Rohlingen der aus den Fig. 1 und 2 ersichtlichen Art.

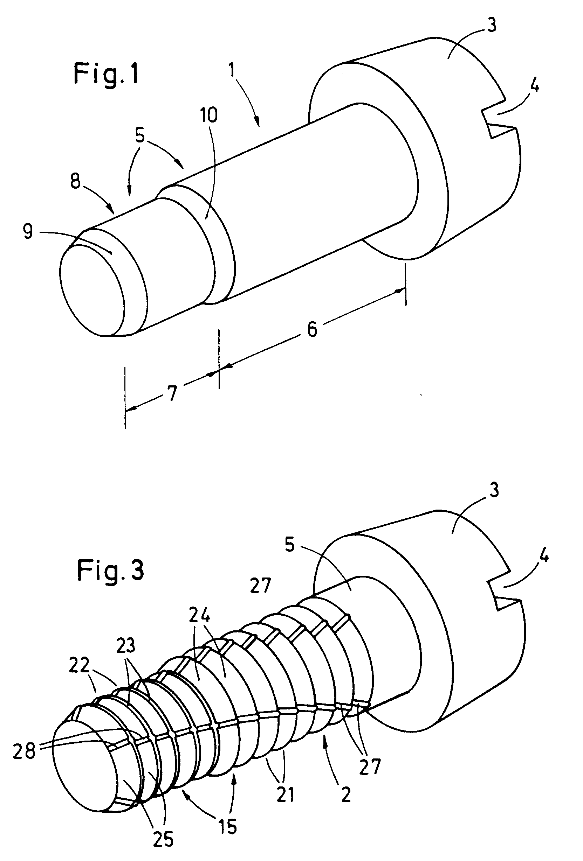

In Fig. 1 der Zeichnung ist ein Schraubenrohling 1 zu sehen, aus dem eine gewindefurchende Schraube 2 gefertigt werden soll, wie sie aus Fig. 3 der Zeichnung ersichtlich ist. Nach Fig. 1 der Zeichnung weist dabei der Schraubenrohling 1 einen Kopf 3 auf, der bspw. eine wenigstens annähernd zylindrische Gestalt hat und dabei an seiner freien Stirnfläche einen Werkzeugeingriff 4, bspw. einen Diametral- bzw. Kreuzschlitz enthält. An den Kopf 3 des Schraubenrohlings 3 schließt sich einstückig ein Schaft 5 an, der auf seiner ganzen Länge einen kreisförmigen Querschnitt hat sowie zwei jeweils zylindrische Längenabschnitte 6 und 7 aufweist. Der das freie Ende des Schaftes 5 bildende Längenabschnitt 7 ist dabei als ein auf einen geringeren Durchmesser abgesetzter Zapfen 8 ausgeführt, der eine konische Endphase 9 aufweist und zum Längenabschnitt 6 hin mit einer ebenfalls konischen Übergangsphase 10 ausgestattet ist.

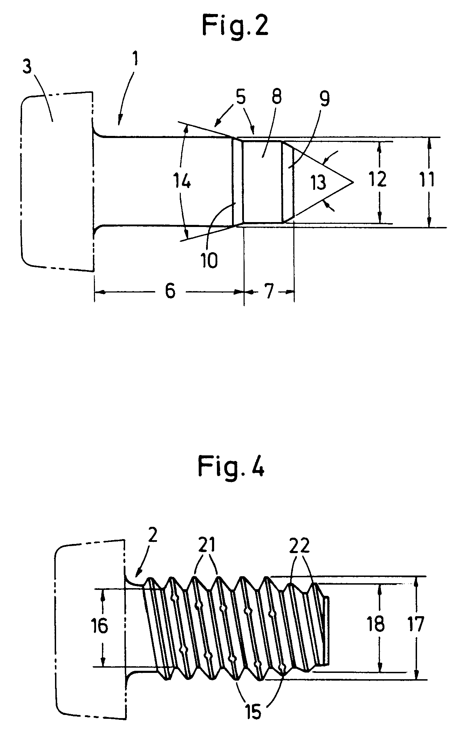

Wie die Fig. 1 und 2 erkennen lassen, hat der vom Längenabschnitt 7 gebildete und auf einen kleineren Durchmesser abgesetzte zylindrische Zapfen 8 eine Länge, die nur einem Bruchteil der Länge des Längenabschnitts 6 am Schaft 5 mit dem größeren Durchmesser entspricht. Diese Länge des zylindrisch abgesetzten Zapfens 8 kann dabei einem Maß entsprechen, das zwischen zwei und vier Gewinde-Steigungsabschnitten liegt und vorzugsweise drei Steigungsabstände des aufzubringenden Gewindes beträgt.

Der größere Durchmesser 11 des Schaftes 5 am Rohling 1 im Bereich des Längenabschnittes 6 kann zum kleineren Durchmesser desselben im Längenabschnitt 7 des Zapfens 8 in einem Verhältnis von 1 : 0,9 bis 1 : 0,96 liegen und in bevorzugten Fällen 1 : 0,93 betragen. Vorgesehen ist dabei auch, daß der Konuswinkel 13 für die Endphase 9 des Zapfens 8 größer, vorzugsweise etwa doppelt so groß bemessen wird, wie der Konuswinkel 14 für die Übergangsphase 10 zwischen dem Zapfen 8 und dem hieran zum Kopf 3 hin anschließenden Längenabschnitt 6 des Schaftes 5. Bewährt hat es sich, der Endphase 9 einen Konuswinkel 13 von 60° zu geben und die Übergangsphase 10 mit einem Konuswinkel 14 von 26° vorzusehen.

In den Schaft 5 des Schraubenrohlings 1 nach den Fig. 1 und 2 wird, wie die Fig. 3 und 4 erkennen lassen, ein Gewinde 15 eingerollt, und zwar mit einem Kerndurchmesser 16, welcher nicht nur den größeren Durchmesser 11 im Längenabschnitt 6 des Schaftes 5, sondern auch noch den kleineren Durchmesser 12 in dessen den Zapfen 8 bildenden Längenabschnitt 7 unterschreitet. Dabei ist es wichtig, daß der Nenndurchmesser 16 des Gewindes 15 zum größeren Durchmesser 11 am Längenabschnitt 6 des Schaftes 5 in einem Verhältnis steht, bei dem sichergestellt wird, daß das bei der Durchführung des Einrollvorgangs entstehende Gewinde 15 ein vollständig ausgeformtes Profil und/oder den Nenndurchmesser 17 aufweist. Andererseits ist es aber wichtig, daß der kleinere Durchmesser 12 des Zapfens 8 im Längenbereich 7 des Schaftes 5 eine solche Bemessung hat, daß im Bereich des Zapfens 8 bzw. auf dem Längenabschnitt 7 nur ein Gewinde mit einem Profilfragment entstehen kann, dessen Durchmesser 18 den Nenndurchmesser 17 unterschreitet, wie das in Fig. 4 der Zeichnung deutlich zu sehen ist. Die im Längenbereich 7 des Schaftes 7 bzw. am Zapfen 8 entstehenden Gewindegänge erhalten also eine Gestalt, bei der keine vollständig ausgeformten Gewindekämme vorhanden sind, sondern stattdessen vielmehr Umfangsflächen, die gegenüber den üblichen Gewindekämmen radial zurückspringen und dafür eine entsprechend größere Breite haben.

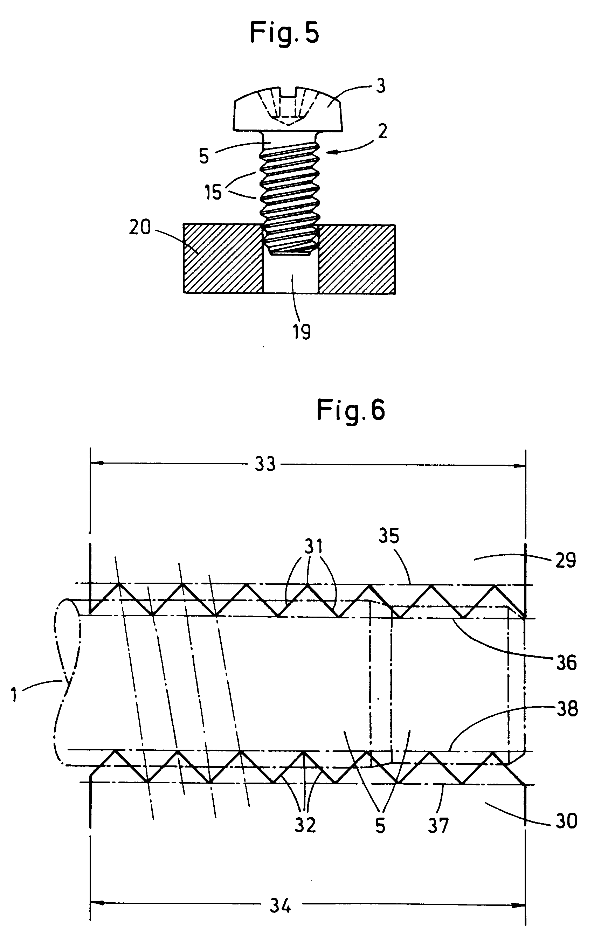

Bei einer bevorzugten Ausführung einer gewindefurchenden Schraube 2 hat es sich als zweckmäßig erwiesen, wenn der größere Durchmesser 11 des Schaftes 5 am Rohling 1 zum Nennmaß 17 des auf diesem vollständig ausgeformten Gewindes 15 in einem Verhältnis steht, das zwischen 0,85 : 1 und 0,9 : 1 liegt. Andererseits kann der kleinere Durchmesser 12 des am Rohling 1 befindlichen Zapfens 8 zum Durchmesser 18 des fragmentarisch profilierten Gewindeabschnitts ein Verhältnis zwischen 0,9 : 1 und 0,98 : 1 erhalten, um beim Eindrehen der Schraube in das hierzu passend vorgegebene Loch 19 eines Werkstücks 20 ein selbsttätiges axiales Ausrichten zu erhalten, wie das in Fig. 5 der Zeichnung angedeutet ist.

In den Fig. 3, 4 und 5 der Zeichnung ist deutlich zu sehen, daß das in den Schaft 5 des Rohlings 1 eingerollte Gewinde 15 bei über die Gesamtlänge des Schaftes 5 gleichbleibendem Kerndurchmesser 16 (vgl. Fig. 4) über den vom Zapfen 8 gebildeten - kürzeren - Längenabschnitt 7 hinweg eine Profilform erhält, welche nur einem Fragment der vollständig ausgeformten Profilform des Gewindes 15 auf dem Längenabschnitt 6 entspricht. Während die Gewindekämme 21 des vollständig ausgeformten Gewindeprofils im wesentlichen scharfkantig bzw. spitzwinklig ausfallen, haben die Gewindekämme 22 des nur fragmentarisch ausgeformten Gewindeprofils im wesentlichen parallel zur Schaftachse liegende bzw. starr abgerundete Umfangsflächen 23.

Es hat sich gezeigt, daß bei einer solchermaßen ausgelegten gewindefurchenden Schraube ein selbsttätiges axiales Ausrichten des Schaftes 5 zur Längsachse des sie aufnehmenden Loches 19 auch dann stattfindet, wenn zu Beginn des Eindrehvorgangs eine bewußte Schiefstellung des Schraubenschaftes gegeben ist.

Es sei noch darauf hingewiesen, daß gewindefurchende Schrauben 2 der vorstehend anhand der Fig. 1 bis 5 beschriebenen Art auch in einer Ausführung hergestellt werden können, die der DE-PS 27 03 433 entspricht. Eine solchermaßen ausgebildete Schraube 2 ist dabei in Fig. 3 der Zeichnung zu sehen.

Gleichzeitig mit dem Einwalzen des Gewindes 15 werden dabei längs streifenförmigen Umfangsabschnitten aus den Flanken 24 und den Kämmen 21 der vollständig ausgeformten Gewindegänge 15 sowie aus den Flanken 25 der nur fragmentarisch ausgeformten Gewindegänge aus dem Material Wulste oder Höcker 27 bzw. 28 überlagert. Im Bereich der Wulste oder Höcker 27 erhält dadurch der Schaftteil der gewindefurchenden Schraube 2 einen Durchmesser, welcher bspw. um 0,05 mm größer ist als der Nenndurchmesser 17 des Gewindes 15.

Bewährt hat es sich, wenn über den Schaftumfang der gewindefurchenden Schraube 2 mehrere, bspw. vier Wulste oder Höcker 27 bzw. 28 gleichmäßig verteilt angeordnet sind, und zwar in der Weise, daß jeder Gewindegang eine entsprechende Anzahl von Wulsten oder Höckern 27 bzw. 28 trägt. Die dabei auf den einzelnen Gewindegängen hintereinanderliegenden Wulste oder Höcker 27 bzw. 28 sind dabei auf streifenförmigen Umfangsabschnitten des Schraubenschaftes angeordnet, welche steil schraubenlinienförmig um den Schaftumfang verlaufen, wie das in Fig. 3 der Zeichnung andeutungsweise zu sehen ist. Die Steigungsrichtung der die Wulste oder Höcker 27 bzw. 28 aufweisenden, steil schraubenlinienförmig um den Schaftumfang verlaufenden, streifenförmigen Umfangsabschnitte entspricht dabei vorteilhafterweise der Steigungsrichtung des Gewindes 15. Bei einem Rechtsgewinde liegen also auch die Wulste oder Höcker 27 bzw. 28 auf mit Rechtsdrall um den Schaftumfang verlaufenden streifenförmigen Umfangsabschnitten, während sie sich bei Linksgewinde auf mit Linksdrall vorgesehenen streifenförmigen Umfangsabschnitten befinden.

Durch das Eindrehen einer solchermaßen ausgeführten, gewindefurchenden Schraube in ein vorgegebenes, bspw. vorgebohrtes Loch wird mittels der den Gewindegängen partiell überlagerten Wulste oder Höcker 27 bzw. 28 durch den Furchvorgang - also spanlos - ein Gewinde in die Bohrungswandungen geformt, in welches sich nach dem späteren Ausdrehen der gewindefurchenden Schraube 2 ohne weiteres auch eine handelsübliche Schraube mit metrischem ISO-Gewinde entsprechend den Normen der Reihe DIN 13 der Toleranzklasse 6h von Hand mit einem Schraubendreher einschrauben läßt.

In Fig. 6 der Zeichnung ist schematisch der Herstellungsvorgang für eine gewindefurchende Schraube 2 nach den Fig. 3, 4 und 5 dargestellt. Hierbei wird ein Schraubenrohling 1 gemäß Fig. 1 mit seinem Schaftteil 5 zwischen die beiden Flachbacken 29 und 30 einer Gewindewalzmaschine eingebracht. Daraufhin werden die beiden Flachbacken 29 und 30 jeweils senkrecht zur Zeichnungsebene synchron in zueinander entgegengesetzten Richtungen relativ zueinander verschoben, während sie über ihr Rillenprofil 32 und 32 mit hohem Druck auf den Umfang des Schaftteils 5 einwirken. Hierbei füllt der Schraubenrohling 1 mit seinem Schaft 5 eine Abwälzbewegung zwischen den beiden Flachbacken 29 und 30 aus, in deren Verlauf eine Materialverdrängung am Umfang des glatt zylindrischen Schaftes 5 sowohl auf dessen Längenabschnitt 6 als auch auf dessen Längenabschnitt 7 stattfindet. Hierdurch bildet sich das Gewinde 15 in der Weise aus, daß es über den Längenabschnitt 6 des Schaftes 5 hinweg sein vollständig ausgeformtes Profil und gleichzeitig den Nenndurchmesser 17 erhält, während es über den Längenabschnitt 7, also am Zapfen 8 nur mit einem fragmentarischen Profil ausfällt, das einen gegenüber dem Nenndurchmesser 17 verringerten Durchmesser 18 hat.

Insgesamt, also auf seiner ganzen Länge, wird aber das Gewinde 15 mit einem übereinstimmenden Kerndurchmesser 16 ausgeformt.

Aus Fig. 6 der Zeichnung geht hervor, daß zum Aufwalzen des Gewindeprofils auf den Schaft 5 des Schraubenrohlings 1 Flachbacken 29 und 30 benutzt werden, deren Breite 33 bzw. 34 mindestens gleich der gesamten mit Gewinde 15 zu versehenden Schaftlänge des Rohlings 2 entspricht. Darüber hinaus haben die Gewinderillen 31 bzw. 32 dieser Flachbacken 29 bzw. 30 jeweils über die gesamte Breite 33 bzw. 34 hinweg gleichbleibende Tiefe, d.h. es ist insgesamt ein dem vollständigen Gewindequerschnitt entsprechendes Rillenprofil 31 bzw. 32 jeweils zwischen zwei parallelen Ebenen 35 und 36 bzw. 37 und 38 vorhanden.

Da allein durch die unterschiedlichen Rohdurchmesser 11 und 12 der Längenabschnitte 6 und 7 des Schaftes 5 auch die unterschiedlichen Gewindeprofile auf den Längenabschnitten 6 und 7 des Schaftes 5 entstehen, lassen sich mit Hilfe ein und desselben Flachbacken-Paares 29/38 problemlos Schrauben mit völlig unterschiedlichen Schaftlängen fertigen.

Es hat sich bewährt, wenn zur Fertigung der gewindefurchenden Schrauben Materialien eingesetzt werden, die eine Zugfestigkeit zwischen 40 und 70 kp/mm² aufweisen. Die zum Einwalzen der Gewinde 15 in den Rohling 1 benutzten Flachbacken werden dabei vorzugsweise mit einer Härte zwischen 57 Rc und 60 Rc eingesetzt.

## Patentansprüche

1. Gewindefurchende Schraube, bei der der Schaft auf seiner ganzen Länge einen durchgehend kreisförmigen Kernquerschnitt aufweist und bei der auch der in den Schaft eingerollte Gewindegang eine kreisförmig verlaufende, äußere Umfangsbegrenzung hat,
**gekennzeichnet durch**
- einen Rohling (1) mit wenigstens annähernd zylindrischem Schaft (5), an dessen freiem Ende sich ein über einen vorgegebenen Längenabschnitt (7) in seinem Durchmesser (12) zylindrisch abgesetzter Zapfen (8) befindet,
- und durch ein in diesen Rohling (1) mit einem dem Durchmesser (12) des Zapfens (8) unterschreitenden Kerndurchmesser (16) eingerolltes Gewinde (15), dessen Profil auf dem den größeren Rohdurchmesser (11) aufweisenden Schaftteil (6) vollständig ausgeformt ist und/oder den Nenndurchmesser (17) aufweist, während es über die mit dem kleineren Rohdurchmesser (12) versehene Zapfenlänge (7) höchstens ein Profilfragment bildet, welches in seinem Durchmesser (18) den Nenndurchmesser (17) unterschreitet.

2. Schraube nach Anspruch 1,
**dadurch gekennzeichnet,**
daß am Rohling (1) die vorgegebene Länge (7) des zylindrisch abgesetzten Zapfens (8) einem Maß entspricht, das zwischen zwei und vier Gewinde-Steigungsabständen liegt, vorzugsweise drei Steigungsabstände des Gewindes (15) beträgt.

3. Schraube nach einem der Ansprüche 1 und 2,
**dadurch gekennzeichnet,**
daß der - größere - Durchmesser (11) des Schaftes (5) am Rohling (1) zum Nennmaß (17) des auf diesem vollständig ausgeformten Gewindes (15) in einem Verhältnis zwischen 0,85 : 1 und 0,9 : 1 steht, während der - kleinere - Durchmesser (12) des am Rohling (1) befindlichen Zapfens (8) zum Durchmesser (18) des fragmentarisch profilierten Gewindeabschnitts ein Verhältnis zwischen 0,9 : 1 und 0,98 : 1 hat.

4. Schraube nach einem der Ansprüche 1 bis 3,
**dadurch gekennzeichnet,**
daß der Zapfen (8) des Rohlings (1) eine konische Endphase (9) hat, während sich zwischen diesem Zapfen (8) und dem Schaft (5) eine ebenfalls konische Übergangsphase (10) befindet.

5. Schraube nach Anspruch 4,
**dadurch gekennzeichnet,**
daß der Konuswinkel (13) der Endphase (9) größer, vorzugsweise etwa doppelt so groß wie der Konuswinkel (14) der Übergangsphase (10) ausgeführt ist.

6. Schraube nach einem der Ansprüche 1 bis 5,
bei der der in den Schaft eingerollte Gewindegang auf in Schraubenlängsrichtung verlaufenden Umfangsabschnitte Höcker aufweist, die über die Gewindeflanken und die Gewindespitze des Gewindeprofils hinweg verlaufen und einstückig aus dem Material des Schraubenschaftes auf die Gewindeflanken und Gewindespitzen geformt sind,
**dadurch gekennzeichnet,**
daß die Höcker (27) zumindest auf über die das vollständig ausgeformte Gewindeprofil aufweisende Gewindelänge (6) des Schraubenschaftes (5) verlaufenden Umfangsabschnitten gleichbleibender Breite liegen, die dem Gewinde (15) gleichmäßig, mit wesentlich größerer Steigung als der des Gewindes (15), schraubenlinienförmig um den Schaftumfang verlaufende überlagert sind und dabei dieselbe Steigungsrichtung wie das Gewinde (15) haben.

7. Schraube nach Anspruch 6,
**dadurch gekennzeichnet,**
daß die Gewindegänge (15) mit vier gleichmäßig um den Schaftumfang verteilt angeordneten streifenförmigen Umfangsabschnitten größerer Profilhöhe vorgesehen sind.

8. Schraube nach einem der Ansprüche 6 und 7,
**dadurch gekennzeichnet,**
daß das Verhältnis ihres Nenndurchmessers zur Steigung der steilschraubenlinienförmig verlaufenden Umfangsabschnitte größerer Profilhöhe etwa 1 : 9 beträgt.

9. Verfahren zum Herstellen von Schrauben nach
einem oder mehreren der Ansprüche 1 bis 8,
durch Drückformen der Gewindegänge mittels gerillter Flachbacken auf Gewindewalzmaschinen,
**dadurch gekennzeichnet,**
daß Rohlinge (1) mit einem an ihrem freien Ende über einen vorgegebenen Längenabschnitt (7) in seinem Durchmesser (12) auf ein verringertes Maß zapfenartig zylindrisch abgesetzten Schaft (5) eingesetzt werden und auf diese das Gewinde (15) mit einem über seine Gesamtlänge gleichen, aber den Zapfendurchmesser (12) unterschreitenden Kerndurchmesser (16) aufgewalzt wird, und daß dabei mit dem Walzvorgang das Gewindeprofil lediglich über den Längenbereich (6) des größeren Schaftdurchmessers (11) vollständig und/oder mit Nenndurchmesser (17) ausgeformt wird.

10. Walzbacken zur Durchführung des Verfahrens nach Anspruch 9, welche mit einem dem Gewindequerschnitt entsprechenden Rillenprofil versehen sind,
**gekennzeichnet durch**
Flachbacken (29, 30) mit einer mindestens der Gesamtlänge (6/7) des Schaftes (5) des Rohlings (1) entsprechenden Breite (33 bzw, 34) und mit einer über diese Breite (33 bzw. 34) hinweg gleichbleibenden Tiefe des dem vollständigen Gewindequerschnitt entsprechenden Rillenprofils (31, 32), das jeweils zwischen zwei zueinander parallelen Ebenen (35, 36 bzw. 37, 38) verläuft, sowie mit einer Härte zwischen 57 Rc und 60 Rc.
